# EUROPEAN PATENT APPLICATION

(11) **EP 4 660 557 A1**
(43) Date of publication of application: **10.12.2025**
(21) Application number: 23928579.4
(22) Date of filing: 20.03.2023
(51) Int. Cl.: F25B 21/00

(54) **MAGNETIC REFRIGERATION DEVICE**

(71) Applicant: MITSUBISHI ELECTRIC CORPORATION, Chiyoda-ku Tokyo 100-8310 (JP)
(72) Inventor: OGASAHARA, Atsushi, Tokyo 100-8310 (JP)
(74) Representative: Meissner Bolte Partnerschaft mbB
(86) International application number: PCT/JP2023/010933
(87) International publication number: WO 2024/194996

(57) **Abstract**

A magnetic refrigeration device (101) includes a magneto-caloric material (2), a magnetic heat container (1) in which the magneto-caloric material is held, the magnetic heat container being provided to form a flow path of a heat transport medium (4) around the magneto-caloric material, and a magnetic field generation device (3) that can apply magnetic field to the magneto-caloric material accommodated in the magnetic heat container and vary magnetic field. In a first state in which the magnetic field generation device applies magnetic field to the magneto-caloric material accommodated in the magnetic heat container, magnetic field passes through the magnetic field generation device and the magneto-caloric material accommodated in the magnetic heat container to form a first magnetic path (MC1). The first magnetic path is different from a path through which magnetic field passes when the magnetic field generation device applies magnetic field to the magnetic heat container where the magneto-caloric material is not accommodated.

## Description

### TECHNICAL FIELD

The present disclosure relates to a magnetic refrigeration device.

### BACKGROUND ART

A magnetic refrigeration device is a cooling and heating system using a magneto-caloric effect. The magnetic refrigeration device is a heat pump system to transport to the outside of a magnetic heat container with the use of a heat transport medium, warm heat and cold heat produced in a magneto-caloric material owing to the magneto-caloric effect, for example, by application of variation in magnetic field to the magneto-caloric material filled in the magnetic heat container.

Japanese Patent Laying-Open No. 2004-317040 (PTL 1) discloses a device to form a magnetic path that passes through a magnetic heat container and a yoke and to vary magnetic field applied to the magnetic heat container by a magnetic field generator composed of a permanent magnet and an electromagnet.

### CITATION LIST

### PATENT LITERATURE

PTL 1: Japanese Patent Laying-Open No. 2004-317040

### SUMMARY OF INVENTION

### TECHNICAL PROBLEM

The magnetic refrigeration device described in PTL 1 requires a large yoke on the magnetic path, but the large yoke makes reduction in weight difficult.

A primary object of the present application is to provide a magnetic refrigeration device that can be lighter in weight than a conventional magnetic refrigeration device.

### SOLUTION TO PROBLEM

A magnetic refrigeration device according to the present disclosure includes a magneto-caloric material, a magnetic heat container in which the magneto-caloric material is held, the magnetic heat container being provided to form a flow path of a heat transport medium around the magneto-caloric material, and a magnetic field generation device that can apply magnetic field to the magneto-caloric material accommodated in the magnetic heat container and vary the magnetic field. In a first state in which the magnetic field generation device applies the magnetic field to the magneto-caloric material accommodated in the magnetic heat container, the magnetic field passes through the magneto-caloric material accommodated in the magnetic heat container to form a first magnetic path. The first magnetic path is different from a path through which the magnetic field passes when the magnetic field generation device applies the magnetic field to the magnetic heat container where the magneto-caloric material is not accommodated.

### ADVANTAGEOUS EFFECTS OF INVENTION

According to the present disclosure, the magnetic refrigeration device that can be lighter in weight than the conventional magnetic refrigeration device can be provided.

### BRIEF DESCRIPTION OF DRAWINGS

Fig. 1 is a cross-sectional view of a magnetic refrigeration device according to a first embodiment.
Fig. 2 is a cross-sectional view of the magnetic refrigeration device according to the first embodiment.
Fig. 3 is a cross-sectional view of the magnetic refrigeration device according to the first embodiment.
Fig. 4 is a cross-sectional view of a modification of the magnetic refrigeration device according to the first embodiment.
Fig. 5 is a cross-sectional view showing a state in which a magnet is arranged at a first position with respect to a magnetic heat container where a magneto-caloric material is not accommodated, in the magnetic refrigeration device according to the first embodiment.
Fig. 6 is a cross-sectional view of a magnetic refrigeration device according to a second embodiment.
Fig. 7 is a cross-sectional view of the magnetic refrigeration device according to the second embodiment.
Fig. 8 is a cross-sectional view of the magnetic refrigeration device according to the second embodiment.
Fig. 9 is a cross-sectional view of a magnetic refrigeration device according to a third embodiment.
Fig. 10 is a cross-sectional view of the magnetic refrigeration device according to the third embodiment.
Fig. 11 is a cross-sectional view of the magnetic refrigeration device according to the third embodiment.
Fig. 12 is a cross-sectional view of a magnetic refrigeration device according to a fourth embodiment.
Fig. 13 is a cross-sectional view of the magnetic refrigeration device according to the fourth embodiment.
Fig. 14 is a cross-sectional view of a magnetic refrigeration device according to a fifth embodiment.
Fig. 15 is a cross-sectional view of the magnetic refrigeration device according to the fifth embodiment.
Fig. 16 is a cross-sectional view of a magnetic refrigeration device according to a sixth embodiment.
Fig. 17 is a cross-sectional view of the magnetic refrigeration device according to the sixth embodiment.
Fig. 18 is a cross-sectional view of a magnetic refrigeration device according to a seventh embodiment.
Fig. 19 is a cross-sectional view of the magnetic refrigeration device according to the seventh embodiment.
Fig. 20 is a cross-sectional view of the magnetic refrigeration device according to the seventh embodiment.
Fig. 21 is a cross-sectional view of a magnetic refrigeration device according to an eighth embodiment.
Fig. 22 is a cross-sectional view of a magnetic refrigeration device according to a ninth embodiment.
Fig. 23 is a cross-sectional view of the magnetic refrigeration device according to the ninth embodiment.
Fig. 24 is a cross-sectional view of a magnetic refrigeration device according to a tenth embodiment.
Fig. 25 is a cross-sectional view of the magnetic refrigeration device according to the tenth embodiment.
Fig. 26 is a cross-sectional view of the magnetic refrigeration device according to the tenth embodiment.
Fig. 27 is a cross-sectional view of the magnetic refrigeration device according to the tenth embodiment.

### DESCRIPTION OF EMBODIMENTS

An embodiment according to the present disclosure will be described below with reference to the drawings. The same or corresponding elements in the drawings below have the same reference characters allotted and description thereof will not be repeated.

### First Embodiment.

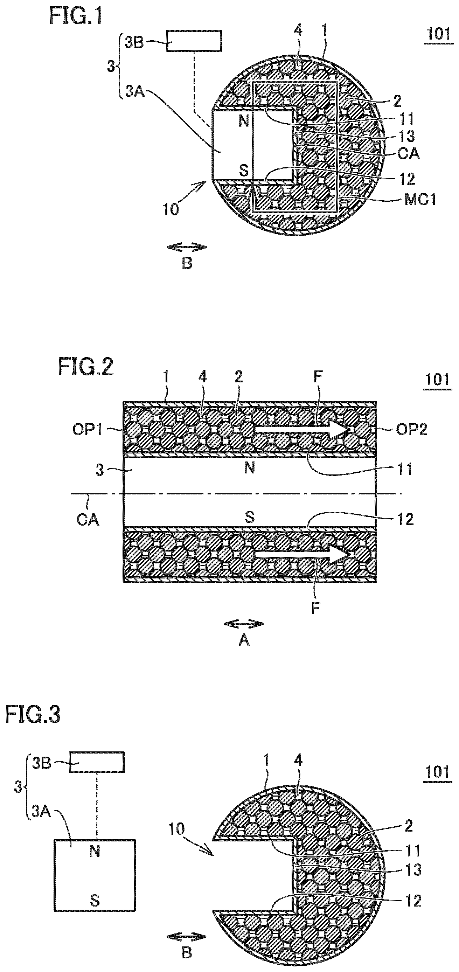

As shown in Figs. 1 to 3, a magnetic refrigeration device 101 according to a first embodiment mainly includes a magnetic heat container 1, a magneto-caloric material 2, a magnetic field generation device 3, and a heat transport medium 4. Magnetic field generation device 3 includes a magnet 3A and a drive unit 3B. Magnetic refrigeration device 101 does not include a yoke.

Figs. 1 and 2 show a first state in which magnet 3A of magnetic refrigeration device 101 according to the first embodiment is located at a first position with respect to magnetic heat container 1. Fig. 3 shows a second state in which magnet 3A of magnetic refrigeration device 101 according to the first embodiment is located at a second position with respect to magnetic heat container 1. Figs. 1 and 3 are cross-sectional views orthogonal to a central axis CA of magnetic heat container 1. Fig. 2 is a cross-sectional view orthogonal to a radial direction with respect to central axis CA (which will simply be denoted as a radial direction below), of magnetic heat container 1 of magnetic refrigeration device 101. Fig. 2 does not show drive unit 3B.

As shown in Fig. 1, magnetic heat container 1 holds magneto-caloric material 2 therein. Magnetic heat container 1 is provided to form a flow path of heat transport medium 4 around magneto-caloric material 2. Magnetic heat container 1 is, for example, a tubular member. Magnetic heat container 1 is, for example, a circular tubular member. Magnetic heat container 1 may be a prismatic tubular member. From a point of view of prevention of diffusion of heat generated in magneto-caloric material 2 to the outside of magnetic heat container 1, magnetic heat container 1 is preferably composed of a material lower in thermal conductivity (higher in thermal insulation) than heat transport medium 4.

As shown in Fig. 1, in the cross-section orthogonal to central axis CA of magnetic heat container 1, magnetic heat container 1 is provided with a recess 10 recessed with respect to an outer circumferential surface of magnetic heat container 1. Recess 10 is provided with a first opposed portion 11 and a second opposed portion 12 opposed to each other in a circumferential direction with respect to central axis CA (which will simply be denoted as a circumferential direction below). Recess 10 is further provided with a connection portion 13 to connect first opposed portion 11 and second opposed portion 12 to each other. Connection portion 13 extends, for example, in a direction orthogonal to the radial direction. Connection portion 13 is arranged, for example, on central axis CA.

Magneto-caloric material 2 is composed of a magnetic material with which a magneto-caloric effect is obtained. A material for magneto-caloric material 2 should only be any material with which the magneto-caloric effect is obtained. For example, when a high magneto-caloric effect is demanded, the material for magneto-caloric material 2 is preferably selected from among materials high in magnetic permeability. Examples of such a material for magneto-caloric material 2 include, for example, an alloy containing gadolinium (Gd) or an alloy containing lanthanum (La).

A shape of magneto-caloric material 2 may freely be selected, and it is, for example, a particulate shape. Preferably, the shape of magneto-caloric material 2 is a spherical shape. Magneto-caloric material 2 is filled and fixed in magnetic heat container 1. In magnetic heat container 1, a gap through which heat transport medium 4 can flow is provided around magneto-caloric material 2.

From a point of view of suppression of magnetic reluctance of a later-described first magnetic path MC1 formed in a first state, magneto-caloric material 2 is preferably densely filled in magnetic heat container 1. In an example where the shape of magneto-caloric material 2 is the particulate shape, from a point of view of suppression of magnetic reluctance by decrease in number of times of passage through air gaps among particles, a particle size (equivalent circle diameter) of magneto-caloric material 2 is preferably equal to or larger than 100 µm. From a point of view of efficient conduction of warm heat or cold heat generated in magneto-caloric material 2 to heat transport medium 4, on the other hand, the particle size of magneto-caloric material 2 is preferably equal to or smaller than 5 mm. In an example where magneto-caloric material 2 is a gadolinium-based alloy, the particle size of magneto-caloric material 2 is preferably approximately 1 mm.

Magnetic field generation device 3 is capable of applying magnetic field to magneto-caloric material 2 accommodated in magnetic heat container 1 and varying magnetic field. Magnetic field generation device 3 includes, for example, magnet 3A and drive unit 3B. Magnet 3A generates magnetic field inside magnetic heat container 1. Drive unit 3B causes magnet 3A to make reciprocating movement, for example, in a direction B. Direction B is a direction orthogonal to central axis CA, in which first opposed portion 11 and second opposed portion 12 extend. Drive unit 3B is, for example, an actuator attached to magnet 3A. Drive unit 3B may cause magnetic heat container 1 to make reciprocating movement with respect to magnet 3A.

Magnet 3A is, for example, a permanent magnet. Magnet 3A may be, for example, a neodymium magnet or a ferrite magnet. Magnet 3A is variable in position relative to magnetic heat container 1. The position of magnet 3A relative to magnetic heat container 1 is changed by drive unit 3B between a first position shown in Fig. 1 and a second position shown in Fig. 3. For example, magnet 3A is movable with respect to magnetic heat container 1.

As shown in Fig. 1, in the first state, magnet 3A located at the first position with respect to magnetic heat container 1 is accommodated in recess 10 and applies magnetic field to magneto-caloric material 2 accommodated in magnetic heat container 1. In the first state, the N pole of magnet 3A is opposed to first opposed portion 11 in the circumferential direction and the S pole of magnet 3A is opposed to second opposed portion 12 in the circumferential direction. In the first state, a side surface of magnet 3A along a direction of magnetization is opposed to connection portion 13 of recess 10 in the radial direction. In the first state, the N pole of magnet 3A may be in contact with first opposed portion 11, the S pole of magnet 3A may be in contact with second opposed portion 12, and the side surface of magnet 3A may be in contact with connection portion 13. A surface area of the N pole of magnet 3A is equal, for example, to an outer surface area of first opposed portion 11 that faces the inside of recess 10. A surface area of the S pole of magnet 3A is equal, for example, to an outer surface area of second opposed portion 12 that faces the inside of recess 10. According to such a configuration of recess 10 in magnetic heat container 1 which is the circular tubular member and magnet 3A, magnetism at relatively uniform strength can be applied to magneto-caloric material 2 filled in magnetic heat container 1 and hence efficiency of use of magneto-caloric material 2 is improved.

As shown in Fig. 1, in the first state, magnetic field generated by magnet 3A inside magnetic heat container 1 passes through magneto-caloric material 2 accommodated in magnetic heat container 1 and magnet 3A to form closed first magnetic path MC1. First magnetic path MC1 passes through only magnet 3A, first opposed portion 11, second opposed portion 12, and the inside of magnetic heat container 1.

Heat transport medium 4 is filled in a gap in magneto-caloric material 2 inside magnetic heat container 1. Heat transport medium 4 transports warm heat and cold heat generated in magneto-caloric material 2 owing to the magneto-caloric effect. Heat transport medium 4 flows through the inside of magnetic heat container 1 in a direction A (see Fig. 2, which will simply be denoted as an axial direction A below) along a central axis C.

As shown in Fig. 2, magnetic heat container 1 further includes a first inflow and outflow portion OP1 and a second inflow and outflow portion OP2. First inflow and outflow portion OP1 is provided at one end in the axial direction of magnetic heat container 1. Second inflow and outflow portion OP2 is provided at the other end in the axial direction of magnetic heat container 1. The heat transport medium flows into magnetic heat container 1 through first inflow and outflow portion OP1, flows through the inside of magnetic heat container 1 in a direction along an arrow F in Fig. 2, and flows to the outside of magnetic heat container 1 through second inflow and outflow portion OP2. Alternatively, heat transport medium 4 flows into magnetic heat container 1 through second inflow and outflow portion OP2, flows through the inside of magnetic heat container 1 in a direction opposite to arrow F, and flows to the outside of magnetic heat container 1 through first inflow and outflow portion OP1.

As shown in Fig. 2, recess 10 extends, for example, in axial direction A. Recess 10 extends, for example, from first inflow and outflow portion OP1 to second inflow and outflow portion OP2. In other words, recess 10 is provided in each of first inflow and outflow portion OP1 and second inflow and outflow portion OP2.

As shown in Fig. 3, in the second state, magnet 3A located at the second position with respect to magnetic heat container 1 is arranged outside recess 10. In the second state, magnetic field applied to magneto-caloric material 2 in the first state has been removed from magneto-caloric material 2. From a different point of view, in the second state, magnet 3A located at the second position with respect to magnetic heat container 1 does not apply to magneto-caloric material 2 accommodated in magnetic heat container 1, magnetic field to such an extent that magneto-caloric material 2 can exhibit the magneto-caloric effect.

Magnetic refrigeration device 101 shown in Figs. 1 to 3 is connected to a pump for inflow of heat transport medium 4 into first inflow and outflow portion OP1 or second inflow and outflow portion OP2 and outflow of heat transport medium 4 from first inflow and outflow portion OP1 or second inflow and outflow portion OP2.

Magnetic refrigeration device 101, on the other hand, may further include a pump for inflow of heat transport medium 4 into first inflow and outflow portion OP1 or second inflow and outflow portion OP2 and outflow of heat transport medium 4 from first inflow and outflow portion OP1 or second inflow and outflow portion OP2.

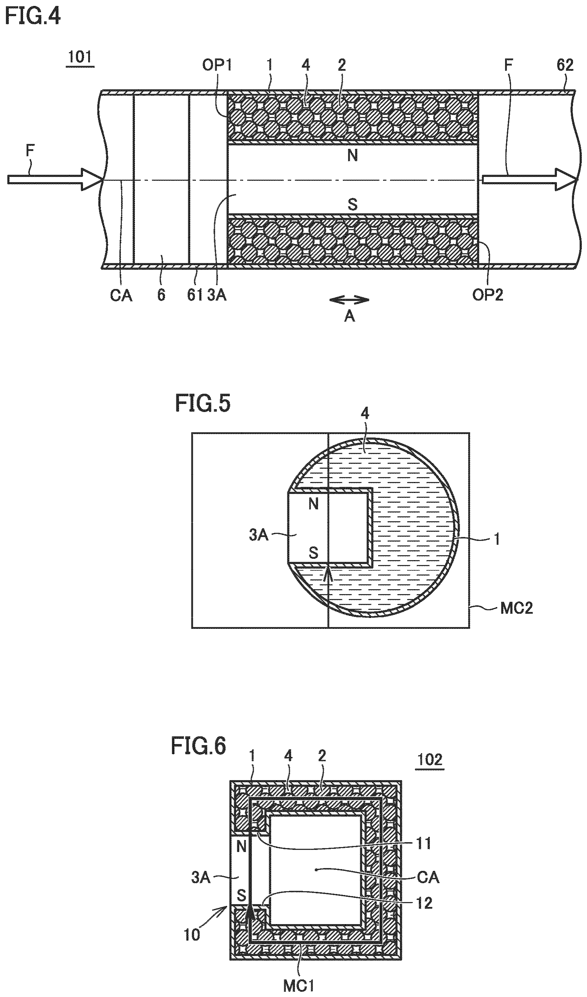

As shown in Fig. 4, magnetic refrigeration device 101 may include a pump 6 for inflow of heat transport medium 4 into first inflow and outflow portion OP1. For example, magnetic refrigeration device 101 may further include a first pipe 61 connected to first inflow and outflow portion OP1 and a second pipe 62 connected to second inflow and outflow portion OP2, and pump 6 may be provided on first pipe 61. Pump 6 transports heat transport medium 4 within first pipe 61, magnetic heat container 1, and second pipe 62 in the direction shown with arrow F in Fig. 4. First pipe 61 is connected, for example, to a not-shown first heat exchanger. Second pipe 62 is connected, for example, to a not-shown second heat exchanger.

An operation of magnetic refrigeration device 101 will now be described. In an initial state, the second state in which magneto-caloric material 2 is equal in temperature to heat transport medium 4, magnet 3A is arranged at the second position with respect to magnetic heat container 1, and magnetic field to magneto-caloric material 2 has been removed is assumed.

Initially, magnet 3A is moved by drive unit 3B from the second position to the first position with respect to magnetic heat container 1 and inserted from the outside of recess 10 in magnetic heat container 1 into the inside thereof. Thus, transition from the second state in which magnetic field to magneto-caloric material 2 accommodated in magnetic heat container 1 has been removed to the first state in which magnetic field is applied to magneto-caloric material 2 accommodated in magnetic heat container 1 is made. In transition from the second state to the first state, magneto-caloric material 2 generates heat and the temperature of magneto-caloric material 2 increases. Since magneto-caloric material 2 becomes higher in temperature than adjacent heat transport medium 4, warm heat conducts from magneto-caloric material 2 to heat transport medium 4 and the temperature of heat transport medium 4 increases. Heat transport medium 4 increased in temperature is transported from magnetic heat container 1 to the outside by pump 6, and supplied to a device (for example, the second heat exchanger) outside magnetic heat container 1. At the same time, new heat transport medium 4 flows into magnetic heat container 1. Warm heat conducts from magneto-caloric material 2 also to heat transport medium 4 that has newly flowed in. Heat transport medium 4 increased in temperature is transported from magnetic heat container 1 to the outside by pump 6. Through the process above, the temperature of magneto-caloric material 2 finally lowers to the temperature of heat transport medium 4 that flows into magnetic heat container 1.

Magnet 3A is then moved from the first position to the second position with respect to magnetic heat container 1 and taken out of the inside of recess 10 in magnetic heat container 1 to the outside thereof by drive unit 3B. Thus, transition from the first state in which magnetic field is applied to magneto-caloric material 2 accommodated in magnetic heat container 1 to the second state in which magnetic field to magneto-caloric material 2 accommodated in magnetic heat container 1 has been removed is made. In transition from the first state to the second state, magneto-caloric material 2 absorbs heat and the temperature of magneto-caloric material 2 lowers. Since magneto-caloric material 2 becomes lower in temperature than adjacent heat transport medium 4, magneto-caloric material 2 removes heat from heat transport medium 4 and the temperature of heat transport medium 4 lowers. Heat transport medium 4 lowered in temperature is transported from magnetic heat container 1 to the outside by pump 6 and supplied to a device (for example, the first heat exchanger) outside magnetic heat container 1. At the same time, new heat transport medium 4 flows into magnetic heat container 1. Warm heat conducts from magneto-caloric material 2 also to heat transport medium 4 that has newly flowed in. Heat transport medium 4 increased in temperature is transported from magnetic heat container 1 to the outside by pump 6. Through the process above, the temperature of magneto-caloric material 2 finally increases to the temperature of heat transport medium 4 that flows into magnetic heat container 1.

As the process above is repeated, according to magnetic refrigeration device 101, high-temperature heat transport medium 4 and low-temperature heat transport medium 4 can alternately be taken out of magnetic heat container 1. Therefore, magnetic refrigeration device 101 functions as a heat pump.

In switching between the first state and the second state, a direction of transport of heat transport medium 4 by pump 6 does not have to be switched. The direction of transport of heat transport medium 4 by pump 6 in the first state may be the same as the direction of transport of heat transport medium 4 by pump 6 in the second state.

In switching between the first state and the second state, the direction of transport of heat transport medium 4 by pump 6 may be switched. The direction of transport of heat transport medium 4 by pump 6 in the second state may be reverse to the direction of transport of heat transport medium 4 by pump 6 in the first state. Thus, one side with respect to magnetic heat container 1 can be at the high temperature and the other side can be at the low temperature. For example, the first heat exchanger connected to first inflow and outflow portion OP1 through first pipe 61 can be a low-temperature-side heat exchanger and the second heat exchanger connected to second inflow and outflow portion OP2 through second pipe 62 can be a high-temperature-side heat exchanger. In this case, a process of excitation of magneto-caloric material 2 and a process of demagnetization of magneto-caloric material 2 are alternately and successively repeated, so that magneto-caloric material 2 plays a role of thermal storage and a temperature difference equal to or more than temperature change obtained in this one cycle can be formed between one side and the other side with respect to magnetic heat container 1.

A state of heat transport medium 4 during the operations above may be a liquid state, a gaseous state, or a liquid-gas mixed state. In an example where heat transport medium 4 is in the liquid-gas mixed state, liquid heat transport medium 4 may gain heat of magneto-caloric material 2 and make phase transition to gas. In this case, latent heat involved with gas-liquid phase transition of heat transport medium 4 becomes transportable. Therefore, while increase in temperature of heat transport medium 4 is suppressed as compared with that in an example where heat transport medium 4 which does not experience phase transition during the operations above is used, an amount of heat transport per unit mass of heat transport medium 4 can be increased.

An effect of magnetic refrigeration device 101 will now be described.

Fig. 5 shows a state in which magnet 3A is arranged at the first position with respect to magnetic heat container 1 where magneto-caloric material 2 is not accommodated. In other words, magnetic heat container 1 shown in Fig. 5 is different from magnetic heat container 1 shown in Fig. 1 only in that magneto-caloric material 2 is not accommodated therein. As shown in Fig. 5, magnet 3A may be provided to form magnetic field that leaks to the outside of magnetic heat container 1 while it is accommodated in recess 10 in magnetic heat container 1 where magneto-caloric material 2 is not accommodated. In magnetic refrigeration device 101, also when magnet 3A is provided as such, the first magnetic path can be formed in the first state as shown in Fig. 1. This is because, in magnetic refrigeration device 101, in the first state, magnetic permeability of magneto-caloric material 2 accommodated in magnetic heat container 1 can be used to spread magnetism of magnet 3A all over magneto-caloric material 2 accommodated in magnetic heat container 1.

Specifically, recess 10 is provided in magnetic heat container 1, and magnet 3A is accommodated in recess 10 in the first state. The N pole of magnet 3A is opposed to first opposed portion 11 and the S pole of magnet 3A is opposed to second opposed portion 12. A path of magnetic field applied to magneto-caloric material 2 by magnet 3A can be formed to pass through the entire magneto-caloric material 2 accommodated in magnetic heat container 1.

Consequently, magnetic refrigeration device 101 does not require a yoke that has been indispensable in the conventional magnetic refrigeration device for forming a path of magnetic field applied to the magneto-caloric material by the magnet, and it can achieve lighter weight than the conventional magnetic refrigeration device.

### <Modification>

Magnetic refrigeration device 101 can be modified as below.

A not-shown coating layer may be formed on a surface of magneto-caloric material 2. The coating layer is provided to suppress corrosion due to contact of magneto-caloric material 2 with heat transport medium 4. A material for the coating layer may be any material capable of suppressing corrosion, and it may be a resin material or a metallic material. Alternatively, heat transport medium 4 may contain an anti-corrosive agent to suppress corrosion. In an example where the coating layer composed of a resin material is formed on the surface of magneto-caloric material 2, electrical conduction between particles of magneto-caloric material 2 may be lowered and eddy current loss caused in magneto-caloric material 2 with change in magnetic field may be reduced.

A material for magneto-caloric material 2 may be a material which becomes lower in magnetic permeability in such a situation that the magneto-caloric effect of magneto-caloric material 2 is low. When the magnetic permeability of magneto-caloric material 2 is low, a strong magnetic path is not formed inside magnetic heat container 1 where magneto-caloric material 2 is accommodated even in the first state, and hence strong magnetic field is not applied to magneto-caloric material 2. Such a configuration is desirable in the example where the magneto-caloric effect by magneto-caloric material 2 is low, from a point of view of suppression of power loss due to generation of an eddy current in magneto-caloric material 2 while magnetic field is applied in the first state.

Magnet 3A is not limited to the permanent magnet. Magnet 3A may be in any configuration so long as it can vary magnetic field to magneto-caloric material 2, and it may be, for example, an electromagnet and more specifically a superconducting electromagnet. In an example where magnet 3A is an electromagnet, magnet 3A may be fixed to recess 10. Magnetic refrigeration device 101 does not have to include drive unit 3B. In this manner as well, magnetic field applied to magneto-caloric material 2 accommodated in magnetic heat container 1 can be varied by adjusting an amount of current to be fed to a coil.

### Second Embodiment.

As shown in Figs. 6 to 8, a magnetic refrigeration device 102 according to a second embodiment is identical in configuration and effect to magnetic refrigeration device 101 according to the first embodiment and operates similarly to magnetic refrigeration device 101 unless otherwise specified.

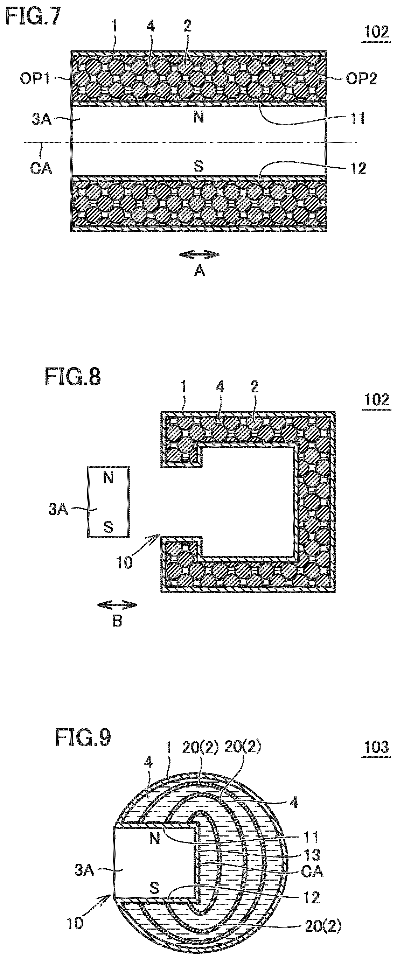

Figs. 6 and 7 show the first state in which magnet 3A of magnetic refrigeration device 102 according to the second embodiment is located at the first position with respect to magnetic heat container 1. Fig. 8 shows the second state in which magnet 3A of magnetic refrigeration device 102 is located at the second position with respect to magnetic heat container 1. Figs. 6 and 8 are each a cross-sectional view orthogonal to central axis CA, of magnetic heat container 1. Fig. 7 is a cross-sectional view orthogonal to the radial direction, of magnetic heat container 1 of magnetic refrigeration device 102. Figs. 6 to 8 do not show drive unit 3B.

In magnetic refrigeration device 102 according to the second embodiment, magnetic heat container 1 is in a C shape in the cross-section orthogonal to central axis CA of magnetic heat container 1. Recess 10 in magnetic heat container 1 is provided as an air gap between opposing ends of the C shape. Recess 10 is recessed toward central axis CA with respect to an outer circumferential surface that faces outward with respect to central axis CA, of outer circumferential surfaces of magnetic heat container 1. First opposed portion 11 and the second opposed portion of recess 10 in magnetic heat container 1 form the opposing ends of the C shape. In the cross-section orthogonal to central axis CA, ends of first opposed portion 11 and second opposed portion 12 located on an inner side (side of central axis CA) are connected to each other, by an inner portion extending in the circumferential direction on an inner side relative to an internal space in magnetic heat container 1. In the cross-section orthogonal to central axis CA, ends of first opposed portion 11 and second opposed portion 12 located on an outer side are connected to each other by an outer portion extending in the circumferential direction on an outer side relative to the internal space in magnetic heat container 1.

As shown in Fig. 6, in magnetic refrigeration device 102, while magnet 3A is arranged at the first position with respect to magnetic heat container 1, magnet 3A and magnetic heat container 1 are arranged in a surrounding shape in the cross-section orthogonal to central axis CA. In such magnetic refrigeration device 102, first magnetic path MC1 longer than in magnetic refrigeration device 101 can be formed. Consequently, based on comparison between magnetic refrigeration device 102 and magnetic refrigeration device 101 configured to be equivalent in cross-sectional area of first magnetic path MC1, an amount of magneto-caloric material 2 that can be accommodated in magnetic heat container 1 of magnetic refrigeration device 102 can be larger than an amount of magneto-caloric material 2 that can be accommodated in magnetic heat container 1 of magnetic refrigeration device 101.

As shown in Fig. 6, magnet 3A and magnetic heat container 1 may be arranged in a quadrangularly surrounding shape in the cross-section orthogonal to central axis CA. Magnet 3A and magnetic heat container 1 may be arranged in an annularly surrounding shape in the cross-section orthogonal to central axis CA.

In the cross-section orthogonal to central axis CA, first opposed portion 11 and second opposed portion 12 are connected to each other, for example, over a shortest distance between the inner portion and the outer portion of magnetic heat container 1. In the cross-section orthogonal to central axis CA, a width of a surface of each of the N pole and the S pole of magnet 3A is equal, for example, to a length of first opposed portion 11 and second opposed portion 12 and the shortest distance between the inner portion and the outer portion of magnetic heat container 1. Magnetic field at uniform strength can thus be applied to magneto-caloric material 2 regardless of a position in magnetic heat container 1.

As shown in Fig. 6, in the first state, a space is provided on an inner side of magnetic heat container 1 and magnet 3A. The space extends along the axial direction. As shown in Fig. 8, in the second state, magnet 3A moves away from the space, and hence the space is maintained also in the second state. An application of the space can freely be selected. For example, the drive unit of magnetic field generation device 3 may be accommodated in the space. In another example, a member to enhance strength of magnetic heat container 1 such as a resin material or cement may be filled in the space. In yet another example, a pipe through which the heat transport medium flows may be accommodated in the space as a return path of the heat transport medium that flows out of magnetic heat container 1.

Magnetic refrigeration device 102 can also be modified similarly to magnetic refrigeration device 101. In magnetic refrigeration device 102 as well, magnet 3A may be an electromagnet. In this case, no recess 10 may be provided in magnetic heat container 1, and a coil included in magnet 3A may be wound around a part in the circumferential direction of magnetic heat container 1 in the surrounding shape. The first magnetic path can be formed also in this manner.

### Third Embodiment.

As shown in Figs. 9 to 11, a magnetic refrigeration device 103 according to a third embodiment is identical in configuration and effect to magnetic refrigeration device 101 according to the first embodiment and operates similarly to magnetic refrigeration device 101 unless otherwise specified.

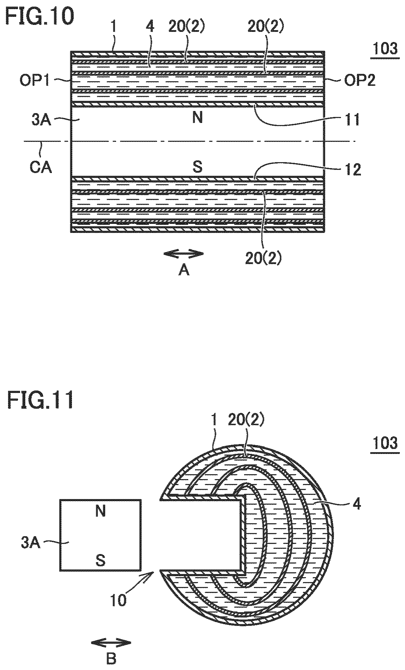

Figs. 9 and 10 show the first state in which magnet 3A of magnetic refrigeration device 103 according to the third embodiment is located at the first position with respect to magnetic heat container 1. Fig. 11 shows the second state in which magnet 3A of magnetic refrigeration device 103 is located at the second position with respect to magnetic heat container 1. Figs. 9 and 11 are each a cross-sectional view orthogonal to central axis CA, of magnetic heat container 1. Fig. 10 is a cross-sectional view orthogonal to the radial direction, of magnetic heat container 1. Figs. 9 to 11 do not show drive unit 3B.

In magnetic refrigeration device 103 according to the third embodiment, magneto-caloric material 2 forms a plurality of plate-shaped members 20 that extend in the direction along the central axis inside magnetic heat container 1.

In the cross-section orthogonal to the central axis of magnetic heat container 1, each of the plurality of plate-shaped members 20 has one end connected to an inner peripheral surface of first opposed portion 11. In the cross-section, each of the plurality of plate-shaped members 20 has the other end connected to an inner peripheral surface of second opposed portion 12. In the cross-section, the plurality of plate-shaped members 20 are arranged at an interval from each other in the radial direction with respect to central axis CA. A gap provided between two adjacent plate-shaped members 20 defines a flow channel of heat transport medium 4. As shown in Fig. 10, the gap provided between two adjacent plate-shaped members 20 is contiguous to first inflow and outflow portion OP1 and second inflow and outflow portion OP2.

From a different point of view, a plurality of slits are provided in magneto-caloric material 2 of magnetic refrigeration device 103. Each slit defines a flow channel of heat transport medium 4.

In magnetic refrigeration device 103, when the magnetic permeability of magneto-caloric material 2 is higher than the magnetic permeability of heat transport medium 4, magnetism of magnet 3A may be concentrated to magneto-caloric material 2. Therefore, in magnetic refrigeration device 103, first magnetic path MC1 may be formed such that it does not pass through the flow channel of heat transport medium 4 but passes only through magnet 3A, first opposed portion 11, magneto-caloric material 2, and second opposed portion 12. Therefore, magnetic reluctance of first magnetic path MC1 formed in magnetic refrigeration device 103 may be lower than magnetic reluctance of first magnetic path MC1 formed in magnetic refrigeration device 101. A cross-sectional area (flow path cross-sectional area) of one space provided between two plate-shaped members 20 adjacent in magnetic refrigeration device 103 may be set to be larger than a cross-sectional area of one space provided between particles of magneto-caloric material 2 in magnetic refrigeration device 101. In this case, pressure loss of heat transport medium 4 that flows in one space provided between two plate-shaped members 20 adjacent in magnetic refrigeration device 103 may be less than pressure loss of heat transport medium 4 that flows in one space provided between particles of magneto-caloric material 2 in magnetic refrigeration device 101.

A thickness of each of the plurality of plate-shaped members 20 affects characteristics of heat conduction (efficiency in heat extraction) between magneto-caloric material 2 and heat transport medium 4. The thickness of each of the plurality of plate-shaped members 20 is, for example, not smaller than 0.5 mm and not larger than 5.0 mm. A width of the space provided between two adjacent plate-shaped members 20 (an interval between two adjacent plate-shaped members 20) affects pressure loss of heat transport medium 4 that flows in the space and characteristics of heat conduction (efficiency in heat extraction) between magneto-caloric material 2 and heat transport medium 4. Too narrow a width of the space leads to increase in pressure loss and lowering in heat extraction efficiency. Too large a width of the space leads to a smaller volume of magneto-caloric material 2 accommodated in magnetic heat container 1 and hence a lower rate of use of a volume of magnetic heat container 1. The interval between two adjacent plate-shaped members 20 may be set based on comparison with the thickness of plate-shaped member 20, and it may be, for example, not smaller than 0.5 mm and not larger than 5.0 mm. Since the magnetic permeability of each plate-shaped member 20 is higher than the magnetic permeability between two adjacent plate-shaped members 20, magnetic fluxes applied by magnet 3A are concentrated to each plate-shaped member 20. In order to enhance a density of magnetic fluxes in each plate-shaped member 20, for example, the interval between two adjacent plate-shaped members 20 may be equivalent to the thickness of plate-shaped member 20 such that the density of magnetic fluxes that pass through each plate-shaped member 20 is approximately two times as high as the density of magnetic fluxes in magnet 3A.

In magnetic refrigeration device 103, a distance between two adjacent plate-shaped members 20 may be constant in at least one of the circumferential direction and the axial direction. The distance between two adjacent plate-shaped members 20 does not have to be constant in each of the circumferential direction and the axial direction. So long as at least parts of two adjacent plate-shaped members 20 are arranged at an interval from each other and a flow path of heat transport medium 4 can be formed, the parts of two adjacent plate-shaped members 20 may come in contact with each other.

In magnetic refrigeration device 103, in the cross-section orthogonal to central axis CA, at least one of plate-shaped members 20 may have one end and the other end connected to connection portion 13.

Magnetic refrigeration device 103 may be similar in configuration to magnetic refrigeration device 102 except that magneto-caloric material 2 forms the plurality of plate-shaped members 20.

### Fourth Embodiment.

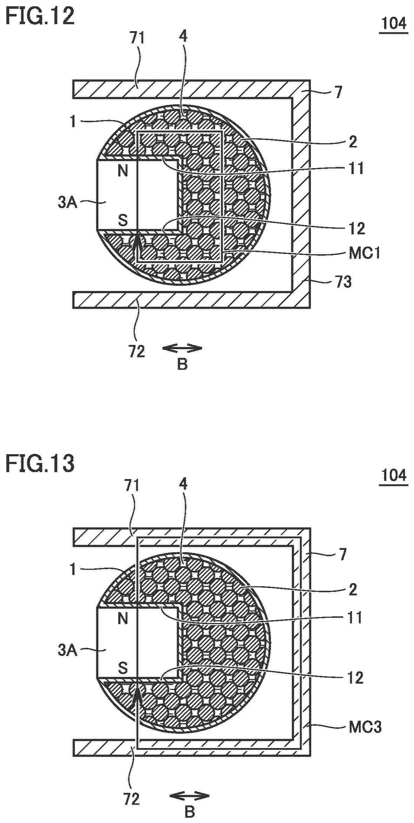

As shown in Fig. 12, a magnetic refrigeration device 104 according to a fourth embodiment is identical in configuration and effect to magnetic refrigeration device 101 according to the first embodiment and operates similarly to magnetic refrigeration device 101 unless otherwise specified.

Fig. 12 shows the first state in which magnet 3A of magnetic refrigeration device 104 is located at the first position with respect to magnetic heat container 1.

Fig. 12 is a cross-sectional view orthogonal to central axis CA, of magnetic heat container 1 of magnetic refrigeration device 104. Fig. 12 does not show drive unit 3B.

As shown in Fig. 12, magnetic refrigeration device 104 includes a yoke 7. Yoke 7 is arranged to surround magnetic heat container 1 in the cross-section orthogonal to central axis CA of magnetic heat container 1. When viewed from the direction along central axis CA of magnetic heat container 1, yoke 7 is arranged to surround magnetic heat container 1. In the cross-section orthogonal to central axis CA of magnetic heat container 1, yoke 7 is in the C shape. In the cross-section orthogonal to central axis CA, yoke 7 includes a third opposed portion 71 opposed to first opposed portion 11 of recess 10 in magnetic heat container 1, a fourth opposed portion 72 opposed to second opposed portion 12 of recess 10, and a connection portion 73 to connect third opposed portion 71 and fourth opposed portion 72 to each other. Connection portion 73 is arranged opposite to recess 10 with respect to central axis CA. In the second state, magnet 3A is arranged opposite to yoke 7 with respect to magnetic heat container 1. A material for yoke 7 is a ferromagnetic material.

A distance between each of third opposed portion 71 and fourth opposed portion 72 of yoke 7 and magnetic heat container 1 is set such that magnetic reluctance of a magnetic path that passes through magnet 3A, magnetic heat container 1, and yoke 7 in the first state while the magnetic permeability of magneto-caloric material 2 has not lowered is higher than magnetic reluctance of first magnetic path MC1. Consequently, as shown in Fig. 12, in the first state while the magnetic permeability of magneto-caloric material 2 has not lowered, first magnetic path MC1 is formed.

Yoke 7 should only be thick to such an extent to avoid magnetic saturation in the first state, and the thickness thereof can be set in accordance with an allowable value of magnetic leakage to the outside in the first state, an amount of lowering in magnetic permeability due to temperature change or secular change expected in magneto-caloric material 2, and the like. The thickness of yoke 7 expected from such a point of view is, for example, equal to or smaller than 10 mm.

In magnetic refrigeration device 104, a material for magneto-caloric material 2 may be a material which tends to vary in magnetic permeability with temperature change and secular change. When the magnetic permeability of magneto-caloric material 2 lowers with temperature change or secular change, depending on magnitude of lowering, first magnetic path MC1 may not be formed even in the first state and magnetism of magnet 3A may leak to the outside of magnetic heat container 1. Yoke 7 serves to prevent magnetism of magnet 3A from leaking to the outside of magnetic refrigeration device 104 in such a case.

Fig. 13 shows a third magnetic path MC3 formed in the first state when the magnetic permeability of magneto-caloric material 2 has lowered in magnetic refrigeration device 104 shown in Fig. 12. In magnetic refrigeration device 104, when the magnetic permeability of magneto-caloric material 2 lowers and the magnetic reluctance of first magnetic path MC1 becomes higher, the magnetic reluctance of the magnetic path that passes through magnet 3A, first opposed portion 11, some magneto-caloric material 2 in magnetic heat container 1, yoke 7, and second opposed portion 12 becomes lower than the magnetic reluctance of first magnetic path MC1. As shown in Fig. 13, in magnetic refrigeration device 104, when the magnetic permeability of magneto-caloric material 2 lowers, third magnetic path MC3 that passes through magnet 3A, first opposed portion 11, magneto-caloric material 2, the outer portion of magnetic heat container 1, yoke 7, the outer portion of magnetic heat container 1, magneto-caloric material 2, and second opposed portion 12 can be formed. Consequently, even when the magnetic permeability of magneto-caloric material 2 lowers in magnetic refrigeration device 104, leakage of magnetism to the outside of magnetic refrigeration device 104 can be prevented.

Magnetic refrigeration device 104 may be similar in configuration to magnetic refrigeration device 102 or magnetic refrigeration device 103 except for including yoke 7.

Yoke 7 of magnetic refrigeration device 104 may include a plurality of projecting portions projecting toward magnetic heat container 1 and arranged at an interval from each other in the direction along central axis CA and a coil wound around each of the plurality of projecting portions, similarly to a first yoke 7A and a second yoke 7B of a magnetic refrigeration device 107 according to a seventh embodiment which will be described later. Magnetic refrigeration device 104 may further include a measurement unit to measure induced electromotive force of the coil produced by magnetic field variation in first magnetic path MC1.

### Fifth Embodiment.

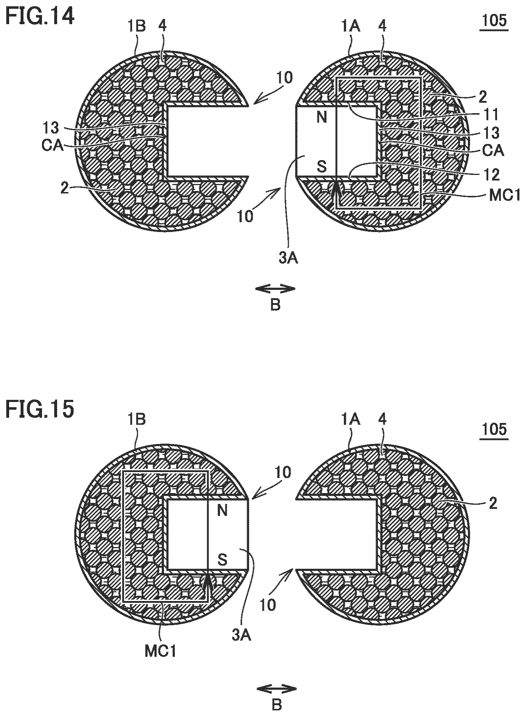

As shown in Figs. 14 and 15, a magnetic refrigeration device 105 according to a fifth embodiment is identical in configuration and effect to magnetic refrigeration device 101 according to the first embodiment and operates similarly to magnetic refrigeration device 101 unless otherwise specified.

As shown in Figs. 14 and 15, magnetic refrigeration device 105 includes a first magnetic heat container 1A and a second magnetic heat container 1B. Each of first magnetic heat container 1A and second magnetic heat container 1B is equivalent in configuration to magnetic heat container 1 of magnetic refrigeration device 101. First magnetic heat container 1A and second magnetic heat container 1B are arranged such that central axes CA thereof extend in parallel to each other and recess 10 in first magnetic heat container 1A and recess 10 in second magnetic heat container 1B are opposed to each other. First magnetic heat container 1A and second magnetic heat container 1B are preferably arranged in line symmetry with respect to a perpendicular bisector of a line segment that connects central axes CA thereof to each other.

Magnetic refrigeration device 105 is provided to switch between a third state shown in Fig. 14 and a fourth state shown in Fig. 15 as a result of reciprocating movement of magnet 3A relative to each of first magnetic heat container 1A and second magnetic heat container 1B.

In the third state shown in Fig. 14, magnet 3A is located at the first position with respect to first magnetic heat container 1A and arranged at the second position with respect to second magnetic heat container 1B. In the third state, first magnetic path MC1 is formed only in first magnetic heat container 1A, of first magnetic heat container 1A and second magnetic heat container 1B.

In the fourth state shown in Fig. 15, magnet 3A first is located at the second position with respect to first magnetic heat container 1A and arranged at the first position with respect to second magnetic heat container 1B. In the fourth state, first magnetic path MC1 is formed only in second magnetic heat container 1B, of first magnetic heat container 1A and second magnetic heat container 1B.

In magnetic refrigeration device 105, switching between the third state and the fourth state is repeatedly made so that magneto-caloric material 2 accommodated in each of first magnetic heat container 1A and second magnetic heat container 1B alternately repeats heat generation and heat absorption. Therefore, magnetic refrigeration device 105 alone can function as a heat pump of a magnetic refrigeration cycle device. In contrast, in magnetic refrigeration device 101, in order to function as the heat pump of the magnetic refrigeration cycle device, at least two magnetic refrigeration devices 101 are required. While one magnetic refrigeration device 101 is in the first state, the other magnetic refrigeration device 101 should be set to the second state, and when one magnetic refrigeration device 101 is switched to the second state, at the same time, the other magnetic refrigeration device 101 should be switched to the first state. Therefore, by adopting magnetic refrigeration device 105 as the heat pump of the magnetic refrigeration cycle device, the number of components, specifically, an amount of use of magnet 3A, can be smaller than in an example where the heat pump of the magnetic refrigeration cycle device is implemented by two magnetic refrigeration devices 101.

A distance in a direction B between first magnetic heat container 1A and second magnetic heat container 1B is set not to form a magnetic path that passes through first magnetic heat container 1A and second magnetic heat container 1B. When a thickness of each of first magnetic heat container 1A and second magnetic heat container 1B is small and magnetic reluctance of a magnetic path that passes through first magnetic heat container 1A and second magnetic heat container 1B in a thickness direction is low, the distance in direction B between first magnetic heat container 1A and second magnetic heat container 1B may be, for example, not shorter than 1 mm and not longer than 10 mm. When the thickness of each of first magnetic heat container 1A and second magnetic heat container 1B is large and the magnetic reluctance of the magnetic path that passes through first magnetic heat container 1A and second magnetic heat container 1B in the thickness direction is high, first magnetic heat container 1A may be in contact with second magnetic heat container 1B.

At least one of first magnetic heat container 1A and second magnetic heat container 1B of magnetic refrigeration device 105 may be similar in configuration to magnetic heat container 1 of magnetic refrigeration device 102, magnetic refrigeration device 103, or magnetic refrigeration device 104.

Magnetic refrigeration device 105 may further include one pump to transport heat transport medium 4 to each of first magnetic heat container 1A and second magnetic heat container 1B. Magnetic refrigeration device 105 may further include a pump to transport heat transport medium 4 to first magnetic heat container 1A and a pump to transport heat transport medium 4 to second magnetic heat container 1B.

### Sixth Embodiment.

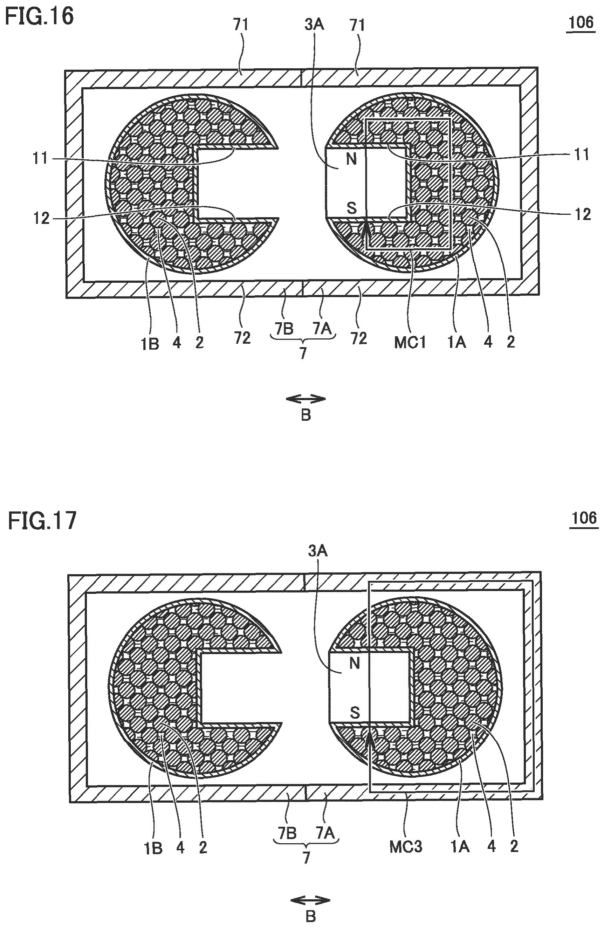

As shown in Fig. 16, a magnetic refrigeration device 106 according to a sixth embodiment is identical in configuration and effect to magnetic refrigeration device 105 according to the fifth embodiment and operates similarly to magnetic refrigeration device 105 unless otherwise specified. Fig. 16 shows the third state in which magnet 3A of magnetic refrigeration device 106 is located at the first position with respect to first magnetic heat container 1A.

As shown in Fig. 16, magnetic refrigeration device 106 is different from magnetic refrigeration device 105 in further including first yoke 7A and second yoke 7B. Each of first yoke 7A and second yoke 7B is similar in configuration to yoke 7 of magnetic refrigeration device 104 according to the fourth embodiment. Relation between first yoke 7A and first magnetic heat container 1A and relation between second yoke 7B and second magnetic heat container 1B are each equivalent to relation between magnetic heat container 1 and yoke 7 in magnetic refrigeration device 104.

In the cross-section orthogonal to central axis CA, first yoke 7A is arranged to surround first magnetic heat container 1A and second yoke 7B is arranged to surround second magnetic heat container 1B. In the cross-section, first yoke 7A and second yoke 7B are arranged in the surrounding shape to surround first magnetic heat container 1A, second magnetic heat container 1B, and magnet 3A as a whole.

In the cross-section orthogonal to central axis CA of each of first magnetic heat container 1A and second magnetic heat container 1B, first yoke 7A and second yoke 7B are connected to each other to form the surrounding shape. Third opposed portion 71 of first yoke 7A is connected to third opposed portion 71 of second yoke 7B. Fourth opposed portion 72 of first yoke 7A is connected to fourth opposed portion 72 of second yoke 7B.

A distance between each of third opposed portion 71 and fourth opposed portion 72 of first yoke 7A and first magnetic heat container 1A is set such that magnetic reluctance of a magnetic path that passes through magnet 3A, first magnetic heat container 1A, and first yoke 7A in the third state while the magnetic permeability of magneto-caloric material 2 accommodated in first magnetic heat container 1A has not lowered becomes higher than magnetic reluctance of first magnetic path MC1 to be formed in magnet 3A and first magnetic heat container 1A in the third state. Consequently, as shown in Fig. 16, in the third state while the magnetic permeability of magneto-caloric material 2 accommodated in first magnetic heat container 1A has not lowered, first magnetic path MC1 is formed in first magnetic heat container 1A.

A distance between each of third opposed portion 71 and fourth opposed portion 72 of second yoke 7B and second magnetic heat container 1B is set such that magnetic reluctance of a magnetic path that passes through magnet 3A, second magnetic heat container 1B, and second yoke 7B in the fourth state while the magnetic permeability of magneto-caloric material 2 accommodated in second magnetic heat container 1B has not lowered becomes higher than magnetic reluctance of first magnetic path MC1 to be formed in magnet 3A and second magnetic heat container 1B in the fourth state. In the fourth state while the magnetic permeability of magneto-caloric material 2 accommodated in second magnetic heat container 1B has not lowered, first magnetic path MC1 is formed in second magnetic heat container 1B.

A thickness of each of first yoke 7A and second yoke 7B can be set from a point of view similar to that for the thickness of yoke 7 of magnetic refrigeration device 104. The thickness of first yoke 7A is, for example, the same as the thickness of second yoke 7B. The thickness of first yoke 7A may be, for example, different from the thickness of second yoke 7B.

In magnetic refrigeration device 106, a material for magneto-caloric material 2 accommodated in each of first magnetic heat container 1A and second magnetic heat container 1B may be a material which tends to vary in magnetic permeability with temperature change and secular change.

Fig. 17 shows third magnetic path MC3 formed in the third state when the magnetic permeability of magneto-caloric material 2 accommodated in first magnetic heat container 1A has lowered in magnetic refrigeration device 106 shown in Fig. 16. In magnetic refrigeration device 106, when the magnetic permeability of magneto-caloric material 2 accommodated in first magnetic heat container 1A lowers and the magnetic reluctance of first magnetic path MC1 becomes higher, the magnetic reluctance of third magnetic path MC3 that passes through magnet 3A, first opposed portion 11 of first magnetic heat container 1A, some magneto-caloric material 2 in first magnetic heat container 1A, first yoke 7A, and second opposed portion 12 of first magnetic heat container 1A becomes lower than the magnetic reluctance of first magnetic path MC1. Consequently, as shown in Fig. 17, third magnetic path MC3 may be formed in magnetic refrigeration device 106.

Similarly, when the magnetic permeability of magneto-caloric material 2 accommodated in second magnetic heat container 1B lowers as well, in magnetic refrigeration device 106, the magnetic reluctance of third magnetic path MC3 that passes through magnet 3A, first opposed portion 11 of second magnetic heat container 1B, some magneto-caloric material 2 in second magnetic heat container 1B, second yoke 7B, and second opposed portion 12 of second magnetic heat container 1B becomes lower than the magnetic reluctance of first magnetic path MC1.

Consequently, even when the magnetic permeability of magneto-caloric material 2 in at least one of first magnetic heat container 1A and second magnetic heat container 1B lowers in magnetic refrigeration device 106, leakage of magnetism to the outside of magnetic refrigeration device 106 can be prevented.

In magnetic refrigeration device 106, first yoke 7A and second yoke 7B are arranged to surround magnet 3A, first magnetic heat container 1A, and second magnetic heat container 1B as a whole. Therefore, first yoke 7A and second yoke 7B can serve as a magnetic shield between the inside and the outside thereof. For example, in an example where first magnetic heat container 1A and second magnetic heat container 1B are arranged at an interval from each other in direction B, in reciprocating movement of magnet 3A between recess 10 in first magnetic heat container 1A and recess 10 in second magnetic heat container 1B, at least a part of magnet 3A is exposed between first magnetic heat container 1A and second magnetic heat container 1B. In this case, even when the magnetic permeability of magneto-caloric material 2 has not lowered, magnetism from magnet 3A leaks to the outside of first magnetic heat container 1A and second magnetic heat container 1B. In magnetic refrigeration device 106, first yoke 7A and second yoke 7B prevent magnetism that has leaked to the outside of first magnetic heat container 1A and second magnetic heat container 1B from leaking to the outside of magnetic refrigeration device 106.

At least one of first magnetic heat container 1A and second magnetic heat container 1B of magnetic refrigeration device 106 may be similar in configuration to magnetic heat container 1 of magnetic refrigeration device 102, magnetic refrigeration device 103, or magnetic refrigeration device 104.

### Seventh Embodiment.

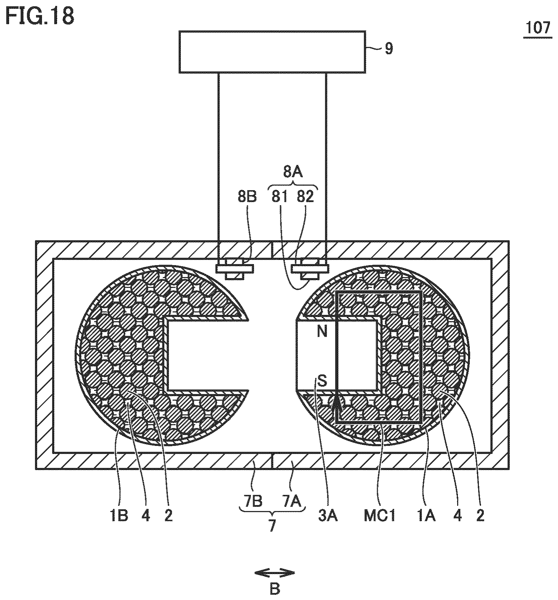

As shown in Figs. 18, 19, and 20, magnetic refrigeration device 107 according to the seventh embodiment is identical in configuration and effect to magnetic refrigeration device 106 according to the sixth embodiment and operates similarly to magnetic refrigeration device 106 unless otherwise specified.

As shown in Figs. 18 to 20, first yoke 7A of magnetic refrigeration device 107 includes a plurality of projecting portions 81 projecting toward recess 10 in first magnetic heat container 1A and arranged at an interval from each other in the direction along central axis CA and a plurality of coils 82 wound around the plurality of projecting portions 81, respectively. A material for each of the plurality of projecting portions 81 is a ferromagnetic material. Each of the plurality of projecting portions 81 is configured, for example, as being integrated with a main body portion of first yoke 7A. A set of projecting portion 81 and coil 82 form a detector 8A to detect variation in magnetic field that passes through projecting portion 81.

Similarly, second yoke 7B includes a plurality of projecting portions 81 projecting toward recess 10 in second magnetic heat container 1B and arranged at an interval from each other in the direction along central axis CA and a plurality of coils 82 wound around the plurality of projecting portions 81, respectively. The plurality of projecting portions 81 and the plurality of coils 82 of second yoke 7B are similar in configuration to the plurality of projecting portions 81 and the plurality of coils 82 of first yoke 7A. A set of projecting portion 81 and coil 82 form a detector 8B to detect variation in magnetic field that passes through projecting portion 81.

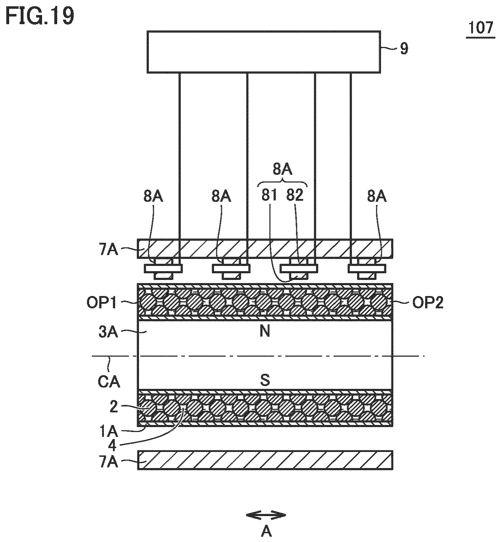

As shown in Fig. 19, the plurality of projecting portions 81 and the plurality of coils 82 are arranged as being aligned, for example, at an interval from each other in direction A along central axis CA. Magnetic refrigeration device 107 further includes a measurement unit 9 to measure induced electromotive force of coil 82. Induced electromotive force of coil 82 is varied by reciprocating movement of magnet 3A in direction B, and an amount of this variation increases with lowering in magnetic permeability of magneto-caloric material 2.

Specifically, as shown in Fig. 18, while the magnetic permeability of magneto-caloric material 2 accommodated in first magnetic heat container 1A has not lowered, magnetism of magnet 3A that passes through first yoke 7A is less. Therefore, induced electromotive force produced in coil 82 with movement of magnet 3A is low and measurement unit 9 measures a relatively low voltage.

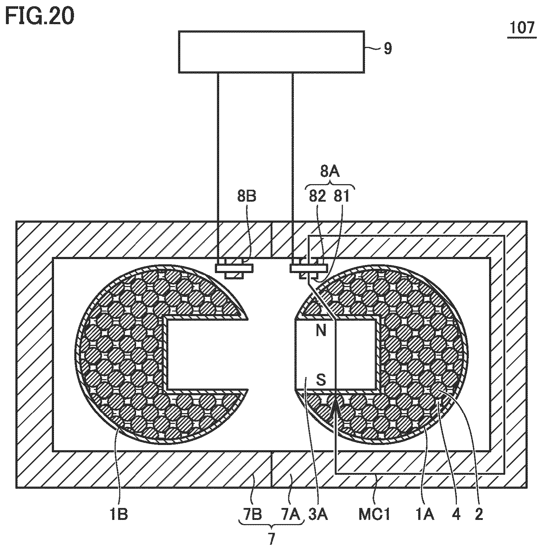

When the magnetic permeability of magneto-caloric material 2 has lowered as shown in Fig. 20, on the other hand, magnetism of magnet 3A that passes through first yoke 7A is much. Therefore, induced electromotive force produced in coil 82 with movement of magnet 3A is higher than that when the magnetic permeability of magneto-caloric material 2 has not lowered. Therefore, the voltage measured by measurement unit 9 is higher than the voltage when the magnetic permeability of magneto-caloric material 2 has not lowered. Consequently, by checking variation in voltage measured by measurement unit 9, appropriate application of variation in magnetic field to magneto-caloric material 2 accommodated in first magnetic heat container 1A or second magnetic heat container 1B can be confirmed. Furthermore, by checking variation in amount of variation in voltage measured by measurement unit 9, the amount of variation in magnetic permeability of magneto-caloric material 2 can be estimated, and a degree of the magneto-caloric effect of magneto-caloric material 2 and the temperature of magneto-caloric material 2 or a state of deterioration of magneto-caloric material 2 based on estimation of the degree of the magneto-caloric effect can be monitored.

In magnetic refrigeration device 107, at least one of first yoke 7A and second yoke 7B should only include at least one projecting portion 81 and at least one coil 82. For example, a set of projecting portion 81 and coil 82 may be arranged only around a region in magnetic refrigeration device 107 where the magnetic permeability of magneto-caloric material 2 is most likely to lower.

At least one of first magnetic heat container 1A and second magnetic heat container 1B of magnetic refrigeration device 107 may be similar in configuration to magnetic heat container 1 of magnetic refrigeration device 102, magnetic refrigeration device 103, or magnetic refrigeration device 104.

### Eighth Embodiment.

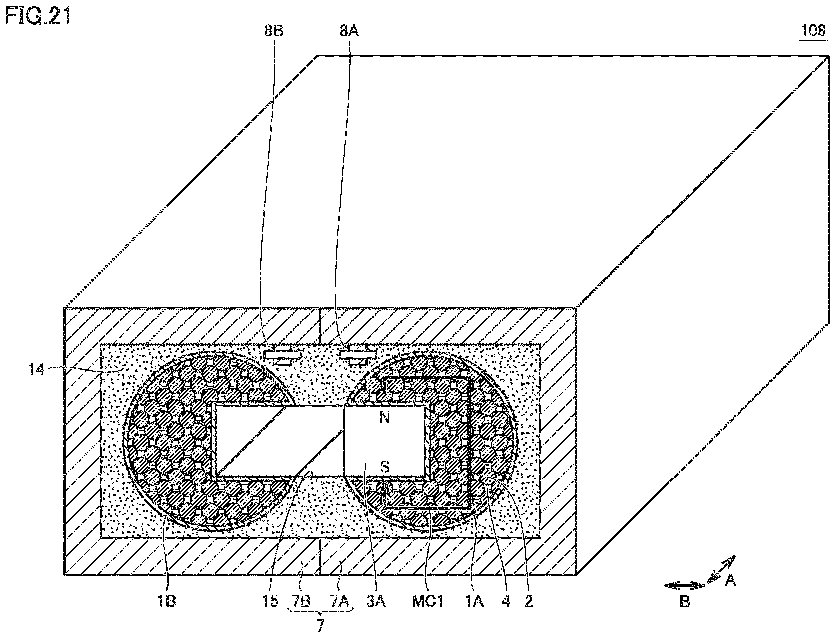

As shown in Fig. 21, a magnetic refrigeration device 108 according to an eighth embodiment is identical in configuration and effect to magnetic refrigeration device 107 according to the seventh embodiment and operates similarly to magnetic refrigeration device 107 unless otherwise specified.

In magnetic refrigeration device 108, an inner side of first yoke 7A and second yoke 7B is filled with an adhesive 14 except for a space 15 where magnet 3A moves. A not-shown core is inserted in space 15 where magnet 3A moves, in filling of a gap between first magnetic heat container 1A and second magnetic heat container 1B and first yoke 7A and second yoke 7B with adhesive 14. The core is removed after adhesive 14 is solidified. Space 15 can thus be provided.

Adhesive 14 is, for example, curable resin or cement. Adhesive 14 is preferably lower in thermal conductivity than first magnetic heat container 1A and second magnetic heat container 1B. Diffusion of heat generated in magneto-caloric material 2 to the outside of first magnetic heat container 1A or second magnetic heat container 1B can thus be suppressed.

In magnetic refrigeration device 108, the gap between first magnetic heat container 1A and second magnetic heat container 1B and first yoke 7A and second yoke 7B except for space 15 where magnet 3A moves is filled with adhesive 14. Therefore, first magnetic heat container 1A and second magnetic heat container 1B are positioned securely with respect to first yoke 7A and second yoke 7B.

When magnet 3A is inserted in or taken out of recess 10 in first magnetic heat container 1A or second magnetic heat container 1B, some of kinetic energy provided to magnet 3A is converted to electromagnetic energy in a form of variation in magnetic field applied to magneto-caloric material 2, and magnetic force is generated between magnet 3A and magneto-caloric material 2. This magnetic force may cause displacement of a relative position of each of magnet 3A, first magnetic heat container 1A and second magnetic heat container 1B, and first yoke 7A and second yoke 7B or minor deformation of first magnetic heat container 1A and second magnetic heat container 1B. In particular during use for consecutive years, magnetic force is repeatedly applied to magnet 3A and magneto-caloric material 2 and possibility above becomes high. In contrast, since first magnetic heat container 1A and second magnetic heat container 1B are fixed to first yoke 7A and second yoke 7B by adhesive 14 in magnetic refrigeration device 108, the possibility above is lowered.

At least one of first magnetic heat container 1A and second magnetic heat container 1B of magnetic refrigeration device 108 may be similar in configuration to magnetic heat container 1 of magnetic refrigeration device 102, magnetic refrigeration device 103, or magnetic refrigeration device 104.

### Ninth Embodiment.

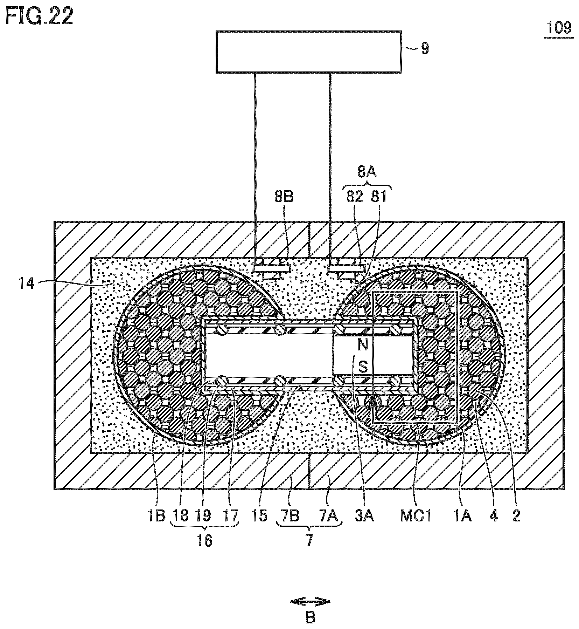

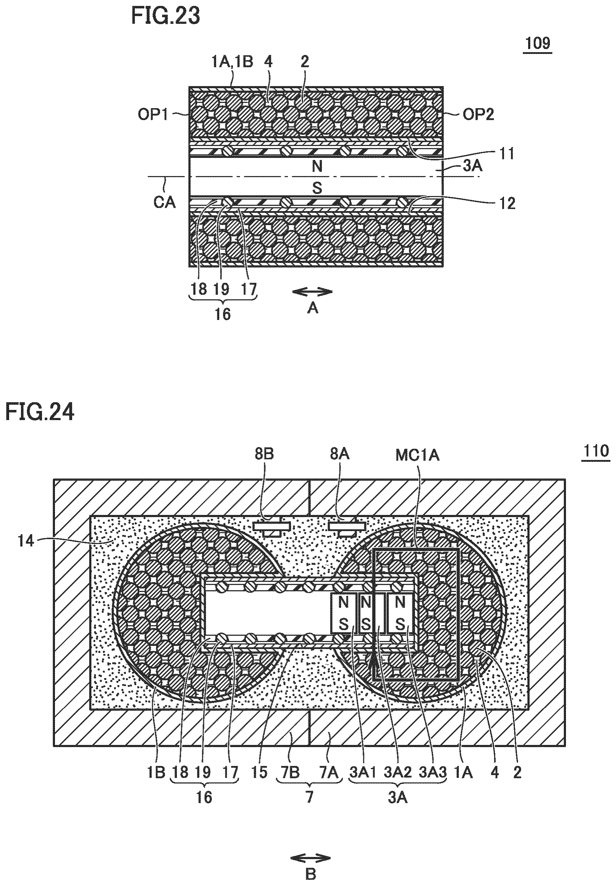

As shown in Figs. 22 and 23, a magnetic refrigeration device 109 according to a ninth embodiment is identical in configuration and effect to magnetic refrigeration device 108 according to the eighth embodiment and operates similarly to magnetic refrigeration device 108 unless otherwise specified.

As shown in Figs. 22 and 23, magnetic refrigeration device 109 further includes at least one bearing 16 arranged in space 15. Bearing 16 guides movement of magnet 3A in direction B. Bearing 16 is arranged between an outer peripheral surface of first opposed portion 11 of each of first magnetic heat container 1A and second magnetic heat container 1B and the N pole surface of magnet 3A and between an outer peripheral surface of second opposed portion 12 of each of first magnetic heat container 1A and second magnetic heat container 1B and the S pole surface of magnet 3A. An axial direction of bearing 16 extends along central axis CA.

Bearing 16 includes an outer ring 17, a retainer 18, and a plurality of rolling elements 19. Outer ring 17 is fitted in space 15. Outer ring 17 is fitted between recess 10 in first magnetic heat container 1A and recess 10 in second magnetic heat container 1B. One axial end of outer ring 17 is connected to recess 10 in first magnetic heat container 1A and the other axial end of outer ring 17 is connected to recess 10 in second magnetic heat container 1B. Retainer 18 is fitted to an inner side of outer ring 17. Retainer 18 is provided with a pocket for holding the plurality of rolling elements 19. Each of the plurality of rolling elements 19 is held by retainer 18 as being rollable. The plurality of rolling elements 19 are arranged, for example, at an interval from each other in each of the axial direction and the circumferential direction of bearing 16. Each of the plurality of rolling elements 19 can be in contact with an outer peripheral surface of magnet 3A. Each of the plurality of rolling elements 19 can roll as magnet 3A makes reciprocating movement in direction B. Bearing 16 may be, for example, a slide bearing.

Magnetic refrigeration device 109 may include a plurality of bearings 16 arranged as being aligned at an interval from each other in direction A. From a different point of view, bearing 16 shown in Fig. 23 may be divided into a plurality of pieces in direction A.

A material for bearing 16 is preferably a non-magnetic material. The N pole surface and the S pole surface of magnet 3A are preferably provided with a plurality of grooved surfaces (rolling contact surfaces) where a part of each of the plurality of rolling elements 19 is accommodated. The plurality of grooved surfaces extend along direction B and are formed at an interval from each other in direction A. A distance between a region of the N pole surface and the S pole surface where the grooved surface is not formed and magneto-caloric material 2 can thus be shorter.

With movement of magnet 3A in direction B, magnetic force in a direction of the pole of magnet 3A is produced also in magnetic refrigeration device 109. In magnetic refrigeration device 109, on the other hand, bearing 16 can prevent change in position of magnet 3A relative to first magnetic heat container 1A and second magnetic heat container 1B, and a shortest distance (a perpendicular distance between surfaces) between outer peripheral surfaces of recess 10 in each of first magnetic heat container 1A and second magnetic heat container 1B and the N pole surface and the S pole surface of magnet 3A can be maintained.

At least one of first magnetic heat container 1A and second magnetic heat container 1B of magnetic refrigeration device 109 may be similar in configuration to magnetic heat container 1 of magnetic refrigeration device 102, magnetic refrigeration device 103, or magnetic refrigeration device 104.

### Tenth Embodiment.

As shown in Figs. 24 to 27, a magnetic refrigeration device 110 according to a tenth embodiment is identical in configuration and effect to magnetic refrigeration device 109 according to the ninth embodiment and operates similarly to magnetic refrigeration device 109 unless otherwise specified.

In magnetic refrigeration device 100, magnet 3A includes a plurality of magnet pieces resulting from division in direction B of movement of magnet 3A. A not-shown drive unit is capable of moving the plurality of magnet pieces stepwise. The drive unit is capable of individually moving the plurality of magnet pieces stepwise and also of simultaneously and collectively moving the plurality of magnet pieces. The number of magnet pieces included in magnet 3A may be any number equal to or larger than two.

In magnetic refrigeration device 110, each of the plurality of magnet pieces is caused to make reciprocating movement stepwise, so that variation in magnetic field applied to first magnetic path MC1 and magneto-caloric material 2 accommodated in second magnetic heat container 1B can be stepwise. In this case, a rate of excitation of magneto-caloric material 2 is lower than that in simultaneous and collective movement of the plurality of magnet pieces. Therefore, heat generation by magneto-caloric material 2 with excitation and heat absorption by magneto-caloric material 2 with demagnetization can slowly proceed. Consequently, in magnetic refrigeration device 110, a difference between the rate of excitation of magneto-caloric material 2 and a rate of heat exchange between magneto-caloric material 2 and heat transport medium 4 can be made smaller, and temperature change of magneto-caloric material 2 caused when the rate of excitation of magneto-caloric material 2 is higher than the rate of heat exchange between magneto-caloric material 2 and heat transport medium 4 can be suppressed.

An operation of magnetic refrigeration device 110 in an exemplary configuration in which magnet 3A is divided into three magnet pieces 3A1, 3A2, and 3A3 will be described below with reference to Figs. 24 to 27. Each of magnet pieces 3A1, 3A2, and 3A3 can individually be driven.

Fig. 24 shows a state (a fifth state below) in which all of three magnet pieces 3A1, 3A2, and 3A3 are in the third state in which they are arranged at the first position with respect to recess 10 in first magnetic heat container 1A. In the fifth state shown in Fig. 24, all of three magnet pieces 3A1, 3A2, and 3A3 are arranged in recess 10 in first magnetic heat container 1A. At this time, a first magnetic path MC1A that passes through magnet 3A and first magnetic heat container 1A is formed.

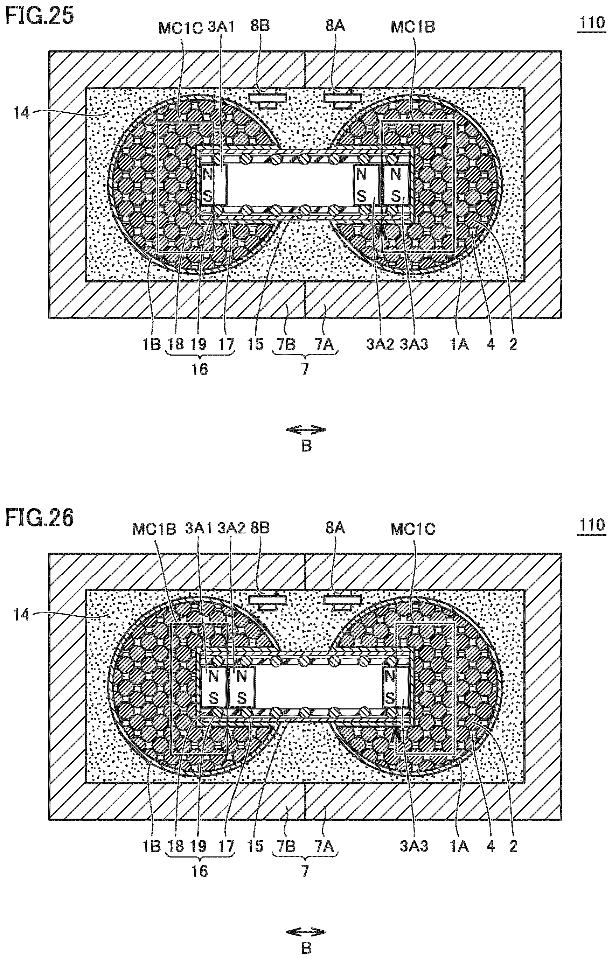

From the fifth state shown in Fig. 24, only one magnet piece 3A1 moves in direction B and is accommodated in recess 10 in second magnetic heat container 1B, so that a state shown in Fig. 25 (a sixth state below) is realized.

In the sixth state shown in Fig. 25, two magnet pieces 3A2 and 3A3 are in the third state in which they are arranged at the first position with respect to first magnetic heat container 1A, and one magnet piece 3A1 is in the fourth state in which it is arranged at the first position with respect to second magnetic heat container 1B and arranged at the second position with respect to first magnetic heat container 1A. A first magnetic path MC1B that passes through magnet pieces 3A2 and 3A3 and first magnetic heat container 1A and a first magnetic path MC1C that passes through magnet piece 3A1 and second magnetic heat container 1B are thus simultaneously formed.

In the sixth state shown in Fig. 25, the number of magnet pieces accommodated in recess 10 in first magnetic heat container 1A is smaller by one and the number of magnet pieces accommodated in recess 10 in second magnetic heat container 1B is larger by one than in the fifth state shown in Fig. 24. Magneto-caloric material 2 accommodated in first magnetic heat container 1A thus absorbs heat and magneto-caloric material 2 accommodated in second magnetic heat container 1B generates heat.

From the sixth state shown in Fig. 25, only one magnet piece 3A2 moves in direction B and is accommodated in recess 10 in second magnetic heat container 1B, so that a state shown in Fig. 26 (a seventh state below) is realized. Switching from the sixth state shown in Fig. 25 to the seventh state shown in Fig. 26 is preferably made after an amount of heat generation by magneto-caloric material 2 in second magnetic heat container 1B resulting from switching from the fifth state shown in Fig. 24 to the sixth state shown in Fig. 25 is conveyed to heat transport medium 4.

In the seventh state shown in Fig. 26, one magnet piece 3A3 is in the third state in which it is arranged at the first position with respect to first magnetic heat container 1A, and two magnet pieces 3A1 and 3A2 are in the fourth state in which they are arranged at the first position with respect to second magnetic heat container 1B and arranged at the second position with respect to first magnetic heat container 1A. First magnetic path MC1C that passes through magnet piece 3A3 and first magnetic heat container 1A and first magnetic path MC1B that passes through magnet pieces 3A1 and 3A2 and second magnetic heat container 1B are thus simultaneously formed.

In the seventh state shown in Fig. 26, the number of magnet pieces accommodated in recess 10 in first magnetic heat container 1A is smaller by one and the number of magnet pieces accommodated in recess 10 in second magnetic heat container 1B is larger by one than in the sixth state shown in Fig. 25. Magneto-caloric material 2 accommodated in first magnetic heat container 1A thus absorbs heat and magneto-caloric material 2 accommodated in second magnetic heat container 1B generates heat.

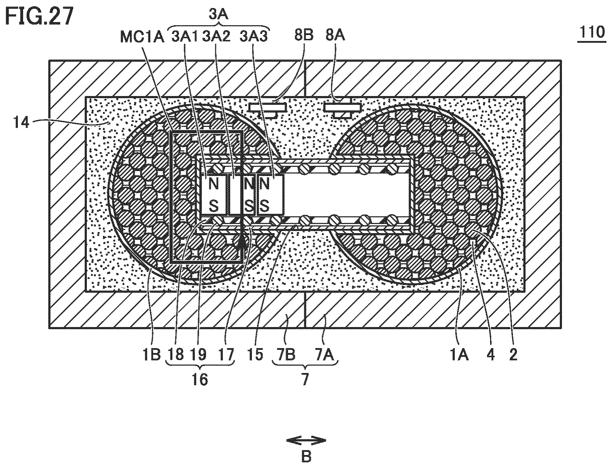

From the seventh state shown in Fig. 26, only one magnet piece 3A3 moves in direction B and is accommodated in recess 10 in second magnetic heat container 1B, so that a state shown in Fig. 27 (an eighth state below) is realized. Switching from the seventh state shown in Fig. 26 to the eighth state shown in Fig. 27 is preferably made after an amount of heat generation by magneto-caloric material 2 in second magnetic heat container 1B resulting from switching from the sixth state shown in Fig. 25 to the seventh state shown in Fig. 26 is conveyed to heat transport medium 4.

In the eighth state shown in Fig. 27, all of three magnet pieces 3A1, 3A2, and 3A3 are in the fourth state in which they are arranged at the first position with respect to recess 10 in second magnetic heat container 1B. In the state shown in Fig. 27, all of three magnet pieces 3A1, 3A2, and 3A3 are accommodated in recess 10 in second magnetic heat container 1B. At this time, first magnetic path MC1A that passes through magnet 3A and second magnetic heat container 1B is formed.

In operations above, magneto-caloric material 2 accommodated in second magnetic heat container 1B is placed in an approximate heat insulating excitation process in switching from the fifth state to the sixth state, and placed in an approximate isothermal excitation process in switching from the sixth state to the seventh state and switching from the seventh state to the eighth state. Furthermore, as three magnet pieces 3A1, 3A2, and 3A3 accommodated in the recess in second magnetic heat container 1B in the eighth state move stepwise into recess 10 in first second magnetic heat container 1B, a thermal cycle including the heat insulating excitation process, the isothermal excitation process, a heat insulating demagnetization process, and an isothermal demagnetization process is realized for magneto-caloric material 2 accommodated in each of first magnetic heat container 1A and second magnetic heat container 1B.

In magnetic refrigeration device 110, only at least one of the plurality of magnet pieces may be caused to make reciprocating movement in direction B. In other words, a position of at least one of the plurality of magnet pieces relative to first magnetic heat container 1A or second magnetic heat container 1B may be held. For example, in magnetic refrigeration device 110, only magnet pieces 3A1 and 3A2 may be allowed to make reciprocating movement with respect to each of first magnetic heat container 1A and second magnetic heat container 1B. In this case, switching from the seventh state to the eighth state described above is not made but switching from the seventh state to the sixth state is made. Magnitude of variation in magnetic field applied to magneto-caloric material 2 accommodated in each of first magnetic heat container 1A and second magnetic heat container 1B can thus be varied stepwise, and output from magnetic refrigeration device 110 can be adjusted stepwise.

At least one of first magnetic heat container 1A and second magnetic heat container 1B of magnetic refrigeration device 110 may be similar in configuration to magnetic heat container 1 of magnetic refrigeration device 102, magnetic refrigeration device 103, or magnetic refrigeration device 104.

### REFERENCE SIGNS LIST

1 magnetic heat container; 1A first magnetic heat container; 1B second magnetic heat container; 2 magneto-caloric material; 3 magnetic field generation device; 3A magnet; 3A1, 3A2, 3A3 magnet piece; 3B drive unit; 4 heat transport medium; 6 pump; 7 yoke; 7A first yoke; 7B second yoke; 8A, 8B detector; 9 measurement unit; 10 recess; 11 first opposed portion; 12 second opposed portion; 13, 73 connection portion; 14 adhesive; 15 space; 16 bearing; 17 outer ring; 18 retainer; 19 rolling element; 20 plate-shaped member; 61 first pipe; 62 second pipe; 71 third opposed portion; 72 fourth opposed portion; 81 projecting portion; 82 coil; 101, 102, 103, 104, 105, 106, 107, 108, 109, 110 magnetic refrigeration device.

## Claims

1. A magnetic refrigeration device comprising:
a magneto-caloric material;
a magnetic heat container in which the magneto-caloric material is held, the magnetic heat container being provided to form a flow path of a heat transport medium around the magneto-caloric material; and
a magnetic field generation device that can apply magnetic field to the magneto-caloric material accommodated in the magnetic heat container and vary the magnetic field, wherein
in a first state in which the magnetic field generation device applies the magnetic field to the magneto-caloric material accommodated in the magnetic heat container, the magnetic field passes through the magneto-caloric material accommodated in the magnetic heat container to form a first magnetic path, and
the first magnetic path is different from a path through which the magnetic field passes when the magnetic field generation device applies the magnetic field to the magnetic heat container where the magneto-caloric material is not accommodated.

2. The magnetic refrigeration device according to claim 1, wherein
the magnetic heat container is a tubular member provided such that the heat transport medium flows inside the tubular member,
the magnetic field generation device includes
a magnet, and
a drive unit to vary the magnetic field by changing a position of the magnet relative to the magnetic heat container between a first position and a second position,
the magnetic heat container is provided with a recess in a cross-section orthogonal to a central axis of the magnetic heat container, the recess being recessed with respect to an outer circumferential surface of the magnetic heat container, the recess including a first opposed portion and a second opposed portion opposed to each other in a circumferential direction with respect to the central axis, and
while the magnet is arranged at the first position with respect to the magnetic heat container, the magnet is accommodated in the recess, an N pole of the magnet is opposed to the first opposed portion, an S pole of the magnet is opposed to the second opposed portion, and the first magnetic path that passes through the magnet, the first opposed portion, the magneto-caloric material accommodated in the magnetic heat container, and the second opposed portion is formed.

3. The magnetic refrigeration device according to claim 2, wherein
in the cross-section orthogonal to the central axis of the magnetic heat container, the magnetic heat container is in a C shape, and the first opposed portion and the second opposed portion are opposing ends of the C shape.

4. The magnetic refrigeration device according to claim 2 or 3, wherein
the magneto-caloric material forms a plurality of plate-shaped members extending in a direction along the central axis in the magnetic heat container, and
in the cross-section orthogonal to the central axis of the magnetic heat container, each of the plurality of plate-shaped members has one end connected to an inner peripheral surface of the first opposed portion and has the other end connected to an inner peripheral surface of the second opposed portion, and the plurality of plate-shaped members are arranged at an interval from each other in a radial direction with respect to the central axis.

5. The magnetic refrigeration device according to any one of claims 2 to 4, wherein
the magnetic heat container comprises
a first inflow and outflow portion into and from which the heat transport medium flows, the first inflow and outflow portion being provided at one end in a direction along the central axis, and
a second inflow and outflow portion into and from which the heat transport medium flows, the second inflow and outflow portion being provided at the other end in the direction along the central axis,
the magnetic refrigeration device further comprises a pump for inflow or outflow of the heat transport medium into or from the first inflow and outflow portion and the second inflow and outflow portion,
the recess extends between the first inflow and outflow portion and the second inflow and outflow portion in the direction along the central axis, and
while the magnet is arranged at the first position with respect to the magnetic heat container, the magnet extends between the first inflow and outflow portion and the second inflow and outflow portion in the direction along the central axis.

6. The magnetic refrigeration device according to any one of claims 2 to 5, further comprising a yoke arranged to surround the magnetic heat container when viewed from a direction along the central axis, wherein
when magnetic permeability of the magneto-caloric material lowers and magnetic reluctance of the first magnetic path becomes higher, magnetic reluctance of a magnetic path that passes through the magnet, the first opposed portion, the magneto-caloric material accommodated in the magnetic heat container, the yoke, and the second opposed portion becomes lower than the magnetic reluctance of the first magnetic path.

7. The magnetic refrigeration device according to any one of claims 2 to 5, comprising:
a first magnetic heat container; and
a second magnetic heat container, wherein
each of the first magnetic heat container and the second magnetic heat container is configured as the magnetic heat container,
the first magnetic heat container and the second magnetic heat container are arranged such that the central axis of the first magnetic heat container and the central axis of the second magnetic heat container extend in parallel to each other and the recess in the first magnetic heat container and the recess in the second magnetic heat container are opposed to each other, and
the drive unit is capable of switching between
a third state in which the magnet is accommodated in the recess in the first magnetic heat container and arranged at the first position with respect to the first magnetic heat container and at the second position with respect to the second magnetic heat container, and
a fourth state in which the magnet is accommodated in the recess in the second magnetic heat container and arranged at the first position with respect to the second magnetic heat container and at the second position with respect to the first magnetic heat container.

8. The magnetic refrigeration device according to claim 7, further comprising a yoke arranged to surround the magnet, the first magnetic heat container, and the second magnetic heat container when viewed from a direction along the central axis, wherein
when magnetic permeability of the magneto-caloric material lowers and magnetic reluctance of the first magnetic path becomes higher, magnetic reluctance of a magnetic path that passes through the magnet, the first opposed portion, the magneto-caloric material accommodated in the magnetic heat container, the yoke, and the second opposed portion becomes lower than the magnetic reluctance of the first magnetic path.

9. The magnetic refrigeration device according to claim 8, wherein
the yoke includes
projecting portions projecting toward the recess and arranged at an interval from each other in the direction along the central axis, and
a coil wound around each of the projecting portions, and
the magnetic refrigeration device further comprises a measurement unit to measure induced electromotive force of the coil generated by magnetic field variation in the first magnetic path.

10. The magnetic refrigeration device according to claim 8 or 9, wherein
when viewed from the direction along the central axis, the yoke is arranged in a surrounding shape to surround the first magnetic heat container, the second magnetic heat container, and the magnet as a whole, and
a gap between the first magnetic heat container and the second magnetic heat container, and the yoke is filled with an adhesive except for a space where the magnet moves.

11. The magnetic refrigeration device according to any one of claims 7 to 10, further comprising a bearing arranged between an outer peripheral surface of the first opposed portion of each of the first magnetic heat container and the second magnetic heat container and an N pole surface of the magnet and between an outer peripheral surface of the second opposed portion of each of the first magnetic heat container and the second magnetic heat container and an S pole surface of the magnet, wherein
an axial direction of the bearing extends along the central axis.

12. The magnetic refrigeration device according to any one of claims 7 to 11, wherein
the drive unit is provided to move the magnet with respect to each of the first magnetic heat container and the second magnetic heat container,
the magnet includes a plurality of magnet pieces divided in a direction of movement of the magnet, and
the drive unit is capable of moving the plurality of magnet pieces stepwise.
